# EUROPÄISCHE PATENTSCHRIFT

(11) **EP 3 939 402 B1**
(45) Veröffentlichungstag und Bekanntmachung des Hinweises auf die Patenterteilung: **29.03.2023**
(21) Anmeldenummer: 21176271.1
(22) Anmeldetag: 27.05.2021
(51) Int. Cl.: A01B 69/00, A01D 67/00, B62D 55/24

(54) **LANDWIRTSCHAFTLICHES ARBEITSFAHRZEUG**
AGRICULTURAL WORK VEHICLE
VÉHICULE DE TRAVAIL AGRICOLE

(30) Priorität: 13.07.2020 DE 102020118368
(43) Veröffentlichungstag der Anmeldung: 19.01.2022
(73) Patentinhaber: CLAAS Selbstfahrende Erntemaschinen GmbH, 33428 Harsewinkel (DE)
(72) Erfinder: Gersmann, Manfred, 48231 Warendorf (DE)
(74) Vertreter: CLAAS Gruppe

(56) Entgegenhaltungen:
- EP-A1- 3 353 520
- DE-A1- 3 909 043
- DE-A1-102017 126 133
- US-B1- 9 033 431

## Beschreibung

Die vorliegende Erfindung betrifft ein landwirtschaftliches Arbeitsfahrzeug gemäß dem Oberbegriff des Anspruches 1.

Ein landwirtschaftliches Arbeitsfahrzeug, welches insbesondere als Traktor oder als eine selbstfahrende Erntemaschine wie ein Mähdrescher oder Feldhäcksler ausgeführt sein kann, ist mit einem Fahrgestell, einem am Fahrgestell angeordneten Antriebsmotor und zumindest zwei an dem Fahrgestell angeordneten Raupenlaufwerken ausgeführt. Jedes der Raupenlaufwerke weist ein um eine horizontal und quer zur Längsachse des Arbeitsfahrzeugs verlaufende Achse an dem Fahrgestell angeordnetes Raupenschiff auf. Jedes Raupenschiff weist vordere und hintere Rollen auf, wobei sich das jeweilige Raupenschiff mittels eines um die Rollen endlos umlaufenden, aus einem gummiartigen Material bestehenden Laufbands auf dem Boden abstützt. Dabei kann das Arbeitsfahrzeug als Halbraupe oder Vollraupe ausgeführt sein.

Beispielsweise sind Raupenlaufwerke mit Raupenschiffen bekannt, die eine vom Fahrantrieb angetriebene Antriebsrolle, eine Führungsrolle und dazwischenliegende Laufrollen aufweisen. In einer anderen Variante, dem sogenannten Dreiecksraupenlaufwerk, weist das Raupenschiff zwei Führungsrollen und eine mittig darüber angeordnete Antriebsrolle oder Antriebsrad auf.

Laufbänder aus einem gummiartigen Material wie einem Elastomer erzeugen bei niedrigeren Temperaturen einen hohen Rollwiderstand, da die Elastizität des Elastomers erst mit zunehmender Erwärmung des Materials zunimmt. Somit wird die Effizienz eines Raupenlaufwerkes beim Anfahren und darüber hinaus reduziert, bis aufgrund der Reibung beim Abrollen eine höhere Betriebstemperatur erreicht wird. Bei hohen Betriebstemperaturen der Laufbänder hingegen, wie sie aufgrund von hohen Außentemperaturen sowie dem zurücklegen längerer Fahrstrecken mit hoher Geschwindigkeit auftreten, wird das Elastomer signifikant weicher, was zu einem signifikant erhöhten Verschleiß führt.

Aus der DE 39 09 043 A1 ist es bekannt, die Lauffläche eines gummielastischen Laufbands eines Raupenlaufwerks mit verschleißhemmenden Elementen zu bestücken, wobei diese Elemente zu einer verbesserten Wärmeabfuhr an die Oberfläche des Laufbands beitragen sollen, um die aufgrund von Walkarbeit im Inneren des Laufbands erzeugte Wärme zu begrenzen.

Die US 9.033,431 B1 offenbart ein landwirtschaftliches Arbeitsfahrzeug gemäß dem Oberbegriff des Anspruches 1. In der US 9,033,431 B1 ist ein Kühlsystem für ein Raupenlaufwerk beschrieben, welches der Abfuhr von Wärme über als Stützrollen ausgeführte Laufrollen des Raupenlaufwerks dient. Die Erwärmung der Stützrollen wird durch den Kontakt mit dem umlaufenden Laufband hervorgerufen. Neben der Wärmeableitung durch Konvektion über die Stützrollen ist alternativ eine aktive Kühlung mittels eines Lüfters vorgesehen, wobei der Lüfter am die Stützrollen tragenden Rahmengestell angeordnet ist. Ein vom Lüfter erzeugter Luftstrom strömt dabei an allen Stützrollen vorbei, um Wärme abzuführen.

Der vorliegenden Erfindung liegt die Aufgabe zugrunde, ein landwirtschaftliches Arbeitsfahrzeug mit Raupenlaufwerken weiterzubilden, welche sich durch ein verbessertes Fahrverhalten auszeichnen, insbesondere wenn das Arbeitsfahrzeug nach dem Starten des Antriebsmotors noch keine Wegstrecke zurückgelegt hat.

Die vorstehende Aufgabe wird bei einem landwirtschaftlichen Arbeitsfahrzeug gemäß dem Oberbegriff von Anspruch 1 durch die Merkmale des kennzeichnenden Teils von Anspruch 1 gelöst. Vorteilhafte Weiterbildungen sind Gegenstand der Unteransprüche.

Gemäß dem Anspruch 1 wird ein landwirtschaftliches Arbeitsfahrzeug vorgeschlagen, mit einem Fahrgestell, einem am Fahrgestell angeordneten Antriebsmotor und zumindest zwei an dem Fahrgestell angeordneten Raupenlaufwerken, welche jeweils ein um eine horizontal und quer zur Längsachse des Arbeitsfahrzeugs verlaufende Achse an dem Fahrgestell angeordnetes Raupenschiff aufweisen, wobei das jeweilige Raupenschiff daran angeordnete vordere und hintere Rollen oder Räder aufweist, wobei sich das jeweilige Raupenschiff mittels eines um die Rollen oder Räder endlos umlaufenden, aus einem gummiartigen Material bestehenden Laufbands auf dem Boden abstützt. Erfindungsgemäß ist vorgesehen, dass das Arbeitsfahrzeug dazu eingerichtet ist, die Laufbänder vor einer Erstbewegung nach dem Starten des Antriebsmotors vorzuwärmen.

Durch das Vorwärmen der Laufbänder wird erreicht, dass die Elastizität des gummiartigen Materials zunimmt, so dass die Raupenlaufwerke mit größerer Effizienz betreibbar sind. Bevorzugt werden zum Vorerwärmen der Laufbänder vorhandene Mittel des Arbeitsfahrzeugs verwendet. Bei den Mitteln kann es sich insbesondere um Komponenten des Arbeitsfahrzeugs handeln, die eine Generierung oder Umlenkung eines Luftstromes ermöglichen. Insbesondere werden am Arbeitsfahrzeug vorgesehene Wärmequellen verwendet, welche für dessen Betrieb notwendig sind. Insbesondere kann es sich bei den Mitteln bzw. Wärmequellen um bereits am Arbeitsfahrzeug vorhandene Komponenten handeln, so dass es im Idealfall keiner Nachrüstung von Wärmequellen bedarf.

Bevorzugt kann zum Vorwärmen eine von dem Antriebsmotor erzeugte Abwärme den Raupenlaufwerken zuführbar sein. Die bereits kurz nach dem Anlassen des insbesondere als Verbrennungskraftmaschine ausgeführten Antriebsmotors erzeugte Abwärme steht dabei zeitnah zur Verfügung, um die Laufbänder vorzuwärmen.

Hierzu kann ein von einer Kühlvorrichtung des Antriebsmotors generierter Luftstrom den Raupenlaufwerken zuführbar sein. Die Kühlvorrichtung umfasst einen angetriebenen Lüfter, welcher Luft aus der Umgebung ansaugt und der Kühlung des Antriebsmotors dient. Mittels des Lüfters kann der erwärmte Luftstrom mit einer von der Lüfterdrehzahl abhängigen Strömungsgeschwindigkeit den Raupenlaufwerken zuführbar sein. Der Lüfter der Kühlvorrichtung stellt ein bereits vorhandenes Mittel des Arbeitsfahrzeugs dar.

Alternativ oder zusätzlich kann zumindest ein Gebläse vorgesehen sein, welches einen temperierten Luftstrom bereitstellt, welcher den Raupenlaufwerken zuführbar ist. Das Gebläse kann mit einer schaltbaren Vorrichtung zur Erwärmung der durchströmenden Luft ausgeführt sein. Mittels der schaltbaren Vorrichtung zur Erwärmung kann ein erwärmter Luftstrom bereitgestellt werden, um die Laufbänder zu erwärmen. Alternativ kann bei abgeschalteter Vorrichtung zur Erwärmung ein Luftstrom mit Umgebungstemperatur bereitgestellt werden, um die Laufbänder bei Bedarf durch Konvektion zu kühlen. Das Kühlen kann insbesondere bei hohen Außentemperaturen sowie beim Zurücklegen längerer Fahrstrecken mit hoher Geschwindigkeit erforderlich sein, um den Verschleiß der Laufbänder zu reduzieren.

Alternativ oder zusätzlich kann ein von dem Antriebsmotor generierter Abgasstrom zur Erwärmung eines Luftstroms verwendbar sein, welcher den Raupenlaufwerken zuführbar ist. Hierbei kann ein Wärmetauscher vorgesehene sein, um im Abgasstrom enthaltene Wärme an den zu erwärmenden Luftstrom abzugeben. Vorzugsweise ist der Wärmetauscher als Gegenstromwärmetauscher ausgeführt.

Um den Laufbändern einen Luftstrom zielgerichtet zuführen zu können, kann jedem Raupenlaufwerk zumindest ein Strömungsleitmittel zugeordnet sein. Mittels des zumindest einen Strömungsleitmittels ist ein temperierter Luftstrom dem Laufband und/oder den Rollen zuführbar. Dabei kann es sich um den erwärmten Luftstrom handeln, welcher durch die Abwärme des Antriebsmotors erwärmt und/oder das zusätzliche Gebläse erwärmt wird. Ebenso kann mittels der Strömungsleitmittel ein Luftstrom zugeführt werden, um die Laufbänder zu kühlen. Hierzu kann ein im Frontbereich des Arbeitsfahrzeugs aufgenommener Luftstrom von den Strömungsleitmitteln in Richtung der Laufbänder und/oder der Rollen gelenkt werden. Alternativ oder zusätzlich kann das zusätzliche Gebläse ohne dessen Heizfunktion verwendet bzw. betrieben werden.

Bevorzugt können die Strömungsleitmittel verstellbar ausgeführt sein. Dabei können die Strömungsleitmittel bezüglich ihrer Leitrichtung und/oder ihrer Durchflussmenge einstellbar sein. Die Strömungsleitmittel können als Leitbleche oder Leitkanäle ausgeführt sein. Zumindest die Leitkanäle können einen beispielsweise durch eine Blende veränderlichen Öffnungsquerschnitt aufweisen, um den Luftvolumenstrom temperaturabhängig variieren zu können. Hierzu kann der Öffnungsquerschnitt der Blende durch einen Aktor einstellbar sein. Alternativ können im Eingangsbereich der Leitbleche oder Leitkanäle um eine Schwenkachse schwenkbare Klappenelemente angeordnet sein. Derartig ausgeführte Strömungsleitmittel ermöglichen eine Verstellung der Durchflussmenge des temperierten Luftstroms durch eine Änderung ihres Anstellwinkels. Dadurch kann der von dem Strömungsleitmittel gelenkte und vorerwärmte Luftstrom anteilig oder vollständig dem jeweiligen Raupenlaufwerk zugeführt werden. Mittels der Klappenelemente ist zudem eine Steuerung der Temperatur des Luftstroms möglich. Insbesondere während der Fahrt lässt sich eine Reduzierung des erwärmten Luftstroms erreichen, indem der zugeführte Anteil an Fahrtwind erhöht wird, was insbesondere der Kühlung der Raupenlaufwerke dient.

Alternativ oder zusätzlich können die Rollen und/oder die Laufbänder elektrisch betriebene Heizelemente aufweisen. So könnte beispielsweise das Vorwärmen der Laufbänder durch induktive Erwärmung erfolgen.

Insbesondere kann das Arbeitsfahrzeug eine Steuerungsvorrichtung umfassen, welche zur Steuerung oder Regelung der Temperierung des den Raupenlaufwerken jeweils zugeführten Luftstroms eingerichtet ist. Dadurch soll ein Überhitzen der Laufbänder vermieden werden. Insbesondere ist die Steuerungsvorrichtung zur Steuerung oder Regelung des Vorgangs des Vorwärmens eingerichtet. Darüber hinaus kann die Steuerungsvorrichtung zur Steuerung oder Regelung einer Betriebstemperatur der Laufbänder eingerichtet sein, welche sich im laufenden Betrieb der Raupenlaufwerke einstellt. Die Steuerungsvorrichtung kann dabei insbesondere zur Steuerung oder Regelung der Temperatur, der Strömungsgeschwindigkeit und/oder der Durchlassmenge eingerichtet sein.

Dazu kann die Steuerungsvorrichtung zur Ansteuerung der Strömungsleitmittel, des zumindest einen Gebläses und/oder der Heizelemente eingerichtet sein.

Zur Überwachung der Temperatur beim Vorwärmen der Laufbänder als auch im laufenden Betrieb kann zumindest einem Laufband ein Temperatursensor zugeordnet sein. Signale des zumindest einen Temperatursensors können von der Steuerungsvorrichtung ausgewertet werden, um die Betriebstemperatur des Laufbandes oder der Laufbänder kontinuierlich zu bestimmen. In Abhängigkeit von der bestimmten Betriebstemperatur werden die Strömungsleitmittel, das zumindest eine Gebläse und/oder die Heizelemente angesteuert, um insbesondere das Vorwärmen der Laufbänder zu bewirken.

Die vorliegende Erfindung wird nachstehend anhand eines in den Zeichnungen dargestellten Ausführungsbeispieles näher erläutert.

Es zeigen:
- Fig. 1: schematisch eine Seitenansicht eines als Traktor ausgeführten Arbeitsfahrzeugs;
- Fig. 2: schematisch eine Seitenansicht des Arbeitsfahrzeugs gemäß Fig. 1; und
- Fig. 3: schematisch eine Teilansicht des Arbeitsfahrzeugs 1 gemäß Fig. 1 von unten.

Ein vorschlagsgemäßes landwirtschaftliches Arbeitsfahrzeug kann ganz unterschiedlich ausgestaltet sein. Beispielsweise kann es sich bei dem landwirtschaftlichen Arbeitsfahrzeug um einen Traktor oder um eine selbstfahrende Erntemaschine, wie einen Mähdrescher oder einen Feldhäcksler, handeln. Die Vorzüge der vorschlagsgemäßen Lösung zeigen sich besonders deutlich bei landwirtschaftlichen Arbeitsfahrzeugen mit zumindest einem Raupenfahrwerk. Bei dem dargestellten und insoweit bevorzugten Ausführungsbeispiel handelt es sich bei dem landwirtschaftlichen Arbeitsfahrzeug 1 um einen Traktor 2 mit Vollraupenfahrwerk.

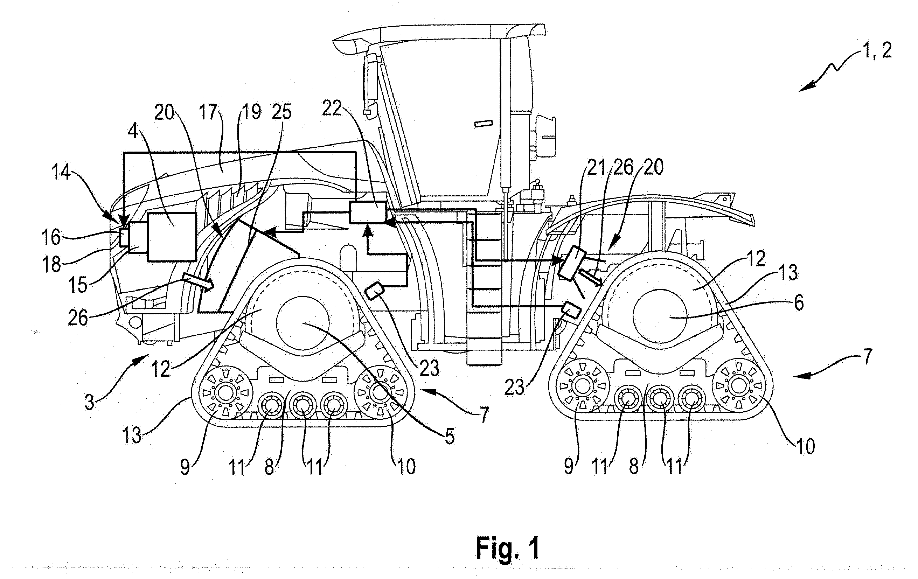

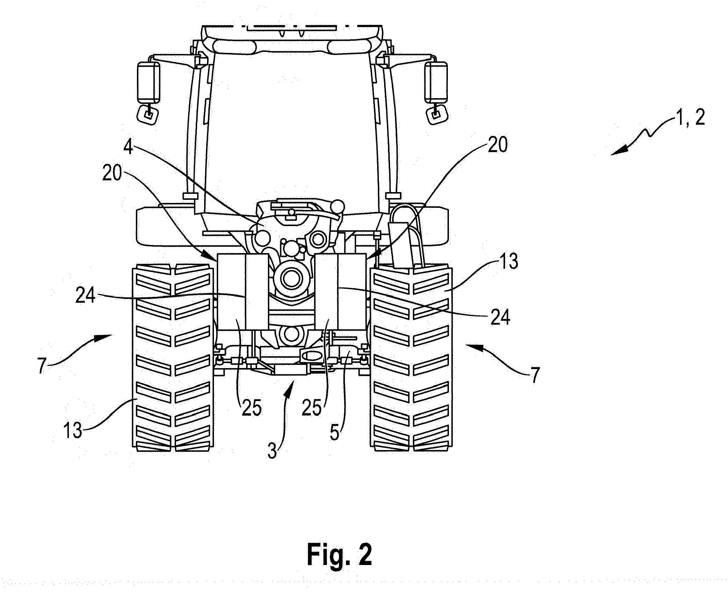

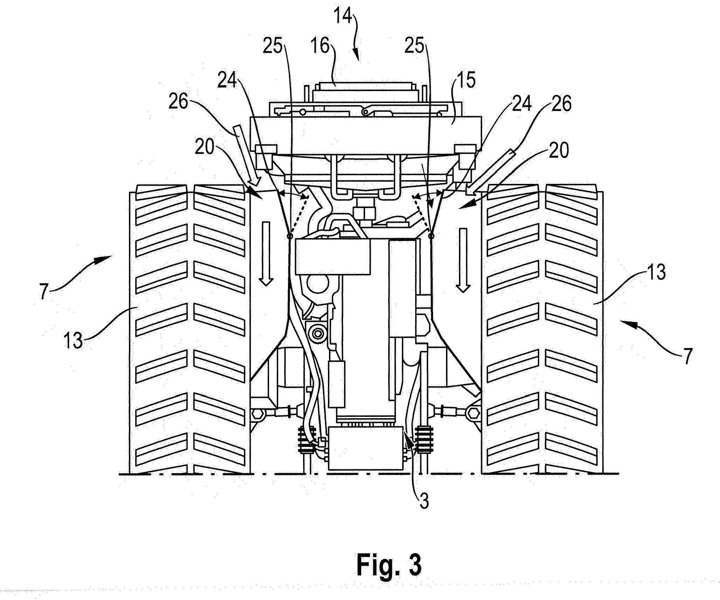

In den Fig. 1 bis 3 ist ein als Traktor 2 ausgeführtes landwirtschaftliches Arbeitsfahrzeug 1 in verschiedenen Ansichten dargestellt. Fig. 1 zeigt eine Seitenansicht des Arbeitsfahrzeugs 1, Fig. 2 zeigt eine Frontansicht und die Darstellung gemäß Fig. 3 zeigt eine Teilansicht des Arbeitsfahrzeugs 1 respektive Traktors 2 von unten.

Ganz allgemein weist das landwirtschaftliche Arbeitsfahrzeugs 1 ein rahmenartiges Fahrgestell 3, einen am Fahrgestell 3 angeordneten Antriebsmotor 4 und jeweils paarweise an als Vorderachse 5 und Hinterachse 6 ausgeführten Achsen des Arbeitsfahrzeugs 1 an dem Fahrgestell 3 angeordnete Raupenlaufwerke 7 auf. Die Raupenlaufwerke 7 des Arbeitsfahrzeugs 1 sind gemäß dem dargestellten Ausführungsbeispiel gleich ausgeführt. Die nachfolgende Beschreibung eines Raupenlaufwerks 7 hat für alle Raupenlaufwerke 7 dieses Arbeitsfahrzeugs 1 Gültigkeit.

Das jeweilige Raupenlaufwerk 7 ist hier und vorzugsweise als Dreieckslaufwerk ausgebildet und umfasst ein Raupenschiff 8, welches als ein einteiliges oder mehrteiliges Rahmengestell ausgeführt ist, das einen unteren, sich horizontal erstreckenden Teil und einen oberen, sich von der Mitte des unteren Teils nach oben erstreckenden Teil aufweist. Am unteren Teil sind eine vordere Rolle 9 und eine hintere Rolle 10 bzw. Räder befestigt. Zwischen den vorderen und hinteren Rollen 9 und 10 sind weitere Rollen 11 bzw. Räder als Stützrollen oder Stützräder angebracht. Am oberen Teil des Raupenschiffs 8 ist eine dem Antrieb dienende Umlenkrolle 12 angeordnet, welche einen größeren Durchmesser als die vordere und hintere Rolle 9, 10 aufweist. Die Umlenkrolle 12 ist mit dem Antriebsmotor 4 durch einen Antriebsstrang verbunden. Um die Rollen 9 bis 12 läuft ein Laufband 13 endlos um, welches aus einem gummiartigen Material wie einem Elastomer besteht.

Das landwirtschaftliche Arbeitsfahrzeug 1, wie beispielsweise der Traktor 2, wird üblicherweise durch den Antriebsmotor 4 in Form einer Verbrennungskraftmaschine angetrieben, welche in einem im Wesentlichen geschlossenen Motorraum angeordnet ist. Der Antriebsmotor 4 liefert dabei die Energie zum Vortrieb des Arbeitsfahrzeugs 1 und üblicherweise auch zum Antreiben von Nebenaggregaten. Zum Abtransport der bei einem Betrieb des Antriebsmotors 4 auftretenden Wärmeenergie wird bei wassergekühlten Verbrennungskraftmaschinen mittels einer Kühlvorrichtung 14 die Wärmeenergie von dem Kühlwasser aufgenommen und in einem Wärmetauscher 15, dem sogenannten Kühler, an die Luft abgegeben, wobei zur Verbesserung der Kühlleistung üblicherweise zumindest ein Lüfter 16 einen Luftstrom an dem Wärmetauscher 15 erzeugt, der die vom Kühlwasser aufgenommene Abwärme des Antriebsmotors 4 aufnimmt und abtransportiert. Der von dem Lüfter 16 erzeugte Luftstrom wird üblicherweise an die Umgebung abgegeben. Hierzu wirken mit der Kühlvorrichtung 14 Betriebsöffnungen 18, 19 in einer den Antriebsmotor 4 umgebenden Abdeckhaube 17 zusammen, wobei beispielsweise Kühlluft durch frontseitig in der Abdeckhaube 17 angeordnete Betriebsöffnungen 18 angesaugt und derart durch den Motorraum geleitet werden kann, dass diese nach einem Überstreichen des Antriebsmotors 4 umgelenkt und durch seitlich in der Abdeckhaube 17 angeordnete, insbesondere rippenförmige, Betriebsöffnungen 19 aus dem Motorraum ausgeblasen werden kann.

Die Laufbänder 13 des Raupenlaufwerks 7 aus einem gummiartigen Material wie einem Elastomer erzeugen bei niedrigeren Temperaturen einen hohen Rollwiderstand, da die Elastizität des Elastomers erst mit zunehmender Erwärmung zunimmt. Somit wird die Effizienz der Raupenlaufwerke 7 im Zeitpunkt des Anfahrens des Arbeitsfahrzeugs 1 und noch darüber hinaus reduziert, bis aufgrund der Reibung beim Abrollen eine höhere Betriebstemperatur erreicht wird. Um die Effizienz der Raupenlaufwerke 7 zu erhöhen, ist das Arbeitsfahrzeug 1 dazu eingerichtet, die Laufbänder 13 vor einer Erstbewegung des Arbeitsfahrzeugs 1 nach dem Starten des Antriebsmotors 4 vorzuwärmen. Gemäß einer bevorzugten Ausführungsform soll ein durch die Abwärme des Antriebsmotors 4 erwärmter Luftstrom 26 erfindungsgemäß dazu verwendet werden, um die Laufbänder 13 zumindest der an der Vorderachse 5 angeordneten Raupenlaufwerke 7 zu erwärmen. Hierzu kann jedem Raupenlaufwerk 7 zumindest ein einteiliges oder mehrteiliges Strömungsleitmittel 20 zugeordnet sein. Im Bereich der Vorderachse 5 sind beidseitig des Antriebsmotors 4 Strömungsleitmittel 20 angeordnet. Das jeweilige Strömungsleitmittel 20 kann dabei als ein Strömungskanal und/oder als ein Leitblech oder mehrere Leitbleche ausgeführt sein, welche eine Kanalisierung des Luftstroms 26 bewirken. Wie in der Darstellung gemäß Fig. 1 angedeutet, kann der Verlauf des Strömungsleitmittels 20 in Richtung des jeweiligen Raupenlaufwerks 7 verjüngend ausgeführt sein.

Einem dem jeweiligen Raupenlaufwerk 7 zugeordneten Strömungsleitmittel 20 kommt die Aufgabe zu, den durch den Antriebsmotor 4 erwärmten Luftstrom 26 dem Laufband 13 zuzuführen, um dieses zu erwärmen. Der Prozess des Vorwärmens erfolgt dabei, bevor die Raupenlaufwerke 7 in Bewegung gesetzt werden. D.h. nach dem Anlassen des Antriebsmotors 4 wird die Abwärme des Antriebsmotor 4 dem jeweiligen Raupenlaufwerk 7 aktiv zugeführt, um dieses zu erwärmen.

Alternativ oder zusätzlich kann zumindest ein Gebläse 21 vorgesehen sein, welches einen temperierten Luftstrom 26 bereitstellt, welcher den Raupenlaufwerken 7 zuführbar ist. Ein solches Gebläse 21 ist schematisch in Fig. 1 dargestellt. Das Gebläse 21 ist dabei im Bereich der Hinterachse 6 angeordnet. Das Gebläse 21 saugt Luft aus der Umgebung an, erwärmt diese vorzugsweise elektrisch und leitet diese in Richtung des Raupenlaufwerks 7. Hierzu können ebenfalls zusätzliche Strömungsleitmittel 20 vorgesehen sein. Der Vorteil des Gebläses 21 liegt in der einfacheren Steuerung zur Temperierung des Luftstroms 26 sowie der unmittelbaren Verfügbarkeit des temperierten Luftstroms 26.

Alternativ oder zusätzlich kann gemäß einer nicht dargestellten Ausführungsform ein von dem Antriebsmotor 4 generierter Abgasstrom zur Erwärmung eines Luftstroms verwendbar sein, welcher den Raupenlaufwerken 7 zuführbar ist. Hier kann Luft aus der Umgebung durch einen Lüfter angesaugt und vorzugsweise im Gegenstrom zum Abgasstrom geführt werden, um die Luft zu erwärmen. Anschließend kann die erwärmte Luft mittels der Strömungsleitmittel 20 und/oder des Gebläses 21 dem jeweiligen Raupenlaufwerk 7 zugeführt werden.

Während der Fahrt des Arbeitsfahrzeugs 1 erwärmen sich die Laufbänder 13 aufgrund der Rollreibung weiter. Dabei können hohe Außentemperaturen und/oder längere Fahrstrecken, die mit hoher Geschwindigkeit zurückgelegt werden, dazu führen, dass der Verschleiß an den Laufbändern 13 zunimmt. Um dem zu begegnen, können die Strömungsleitmittel 20 in der Weise verstellbar sein, dass diese statt des von der Kühlvorrichtung 14 bereitgestellten, erwärmten Luftstroms den Raupenlaufwerken 7 Fahrtwind zuführen, um diese zu kühlen. Dies kann entsprechend für das zumindest eine Gebläse 21 gelten, indem die Heizfunktion deaktiviert wird.

Das Arbeitsfahrzeug 1 umfasst eine Steuerungsvorrichtung 22, welche zur Steuerung oder Regelung einer Temperaturanpassung der Raupenlaufwerke 7 eingerichtet ist. Die Steuerungsvorrichtung 22 ist zur Ansteuerung der Strömungsleitmittel 20 und/oder des zumindest einen Gebläses 21 eingerichtet. Die Ansteuerung durch die Steuerungsvorrichtung 22 erfolgt insbesondere temperurabhängig. Zudem kann eine zeitabhängige Komponente berücksichtigt werden, welche die Dauer des Vorwärmens bestimmt. Je niedriger die Umgebungstemperatur, desto länger kann der Vorgang des Vorwärmens andauern. Für die temperaturabhängige Ansteuerung kann zumindest einem Laufband 13 ein Temperatursensor 23 zugeordnet sein. Der jeweilige Temperatursensor 23 überträgt Signale an die Steuerungsvorrichtung 22 zur Auswertung der am Laufband 13 vorherrschenden Temperatur. Dabei wird durch die Steuerungsvorrichtung 22 nicht nur der Vorgang des Vorwärmens vor einer Erstbewegung der Raupenlaufwerke 7 nach dem Starten des Antriebsmotors 4 temperurabhängig angesteuert, sondern zu einem späteren Zeitpunkt im laufenden Betrieb der Raupenlaufwerke 7 auch deren aktive Kühlung zur Verschleißminderung.

Die Darstellung in Fig. 2 zeigt eine Frontansicht des Arbeitsfahrzeug 1, wobei der Motorraum offen dargestellt ist. Die beidseitig des Antriebsmotors 4 angeordneten Strömungsleitmittel 20 sind als Leitkanäle ausgeführt. Wie insbesondere aus der Darstellung gemäß Fig. 3, die eine Teilansicht des Arbeitsfahrzeugs 1 von unten zeigt, ersichtlich ist, weisen die als Leitkanäle ausgeführten Strömungsleitmittel 20 im Bereich ihrer jeweiligen Einströmöffnung ein Klappenelement 24 auf. Die Klappenelemente 24 befinden sich in einer ersten Endstellung. In dieser ersten Endstellung wird im Wesentlichen nur ein vom Fahrtwind generierter Luftstrom 26 dem jeweiligen Raupenlaufwerk 7 zugeführt. Das jeweilige Klappenelement 24 ist mittels eines- nicht dargestellten - Aktors um eine Schwenkachse 25 schwenkbar. Die strichlinierte Darstellung der Klappenelemente 24 verdeutlicht eine zweite Endstellung der Klappenelemente 24. Die Ansteuerung der Aktoren zur Verstellung der Klappenelemente 24 erfolgt durch die Steuerungsvorrichtung 22.

Befinden sich die Klappenelemente 24 in ihrer strichliniert dargestellten zweiten Endstellung, wird im Wesentlichen ein von dem Lüfter 16 der Kühlvorrichtung 14 erzeugter und durch die Abwärme des Antriebsmotors 4 erwärmter Luftstrom 26 dem jeweiligen Raupenlaufwerk 7 zugeführt. Die Klappenelemente 24 sind zwischen ihren beiden Endstellungen in beliebigen Schwenkpositionen positionierbar, so dass der jeweilige Luftstrom 26 anteilig vom Fahrtwind und vom Lüfter 16 generiert wird. Hierdurch lassen sich den Raupenlaufwerken 7 während der Fahrt Luftströme 26 mit unterschiedlichen, einstellbaren Temperaturen zuführen. Denkbar ist auch, dass die Steuerungsvorrichtung 22 den Lüfter 16 ansteuert, um den Raupenlaufwerken 7 den erwärmten Luftstrom 26 mit unterschiedlichen Strömungsgeschwindigkeiten zuzuführen.

Weiterhin ist es denkbar, die als Leitkanäle ausgeführten Strömungsleitmittel 20 mit einer Blende mit einstellbarem Öffnungsquerschnitt oder dergleichen zu versehen, um eine Durchflussregulierung des jeweiligen Luftstroms 26 zu bewirken.

### Bezugszeichenliste

- 1: Arbeitsfahrzeug
- 2: Traktor
- 3: Fahrgestell
- 4: Antriebsmotor
- 5: Vorderachse
- 6: Hinterachse
- 7: Raupenlaufwerk
- 8: Raupenschiff
- 9: Rolle
- 10: Rolle
- 11: Rolle
- 12: Umlenkrolle
- 13: Laufband
- 14: Kühlvorrichtung
- 15: Wärmetauscher
- 16: Lüfter
- 17: Abdeckhaube
- 18: Betriebsöffnung
- 19: Betriebsöffnung
- 20: Strömungsleitmittel
- 21: Gebläse
- 22: Steuerungsvorrichtung
- 23: Temperatursensor
- 24: Klappenelement
- 25: Schwenkachse
- 26: Luftstrom

## Patentansprüche

1. Landwirtschaftliches Arbeitsfahrzeug (1, 2), mit einem Fahrgestell (3), einem am Fahrgestell (3) angeordneten Antriebsmotor (4) und zumindest zwei an dem Fahrgestell (3) angeordneten Raupenlaufwerken (7), welche jeweils ein um eine horizontal und quer zur Längsachse des Arbeitsfahrzeugs (1, 2) verlaufende Achse (5, 6) an dem Fahrgestell (3) angeordnetes Raupenschiffe (8) aufweisen, wobei das jeweilige Raupenschiff (8) daran angeordnete vordere und hintere Rollen (9, 10) aufweist, wobei sich das jeweilige Raupenschiff (8) mittels eines um die Rollen (9, 10) endlos umlaufenden, aus einem gummiartigen Material bestehenden Laufbands (13) auf dem Boden abstützt, **dadurch gekennzeichnet, dass** das Arbeitsfahrzeug (1, 2) dazu eingerichtet ist, die Laufbänder (13) vor einer Erstbewegung nach dem Starten des Antriebsmotors (4) vorzuwärmen.

2. Landwirtschaftliches Arbeitsfahrzeug (1, 2) nach Anspruch 1, **dadurch gekennzeichnet, dass** zum Vorwärmen eine von dem Antriebsmotor (4) erzeugte Abwärme den Raupenlaufwerken (7) zuführbar ist.

3. Landwirtschaftliches Arbeitsfahrzeug (1, 2) nach Anspruch 1 oder 2, **dadurch gekennzeichnet, dass** ein von einer Kühlvorrichtung (14) des Antriebsmotors (4) generierter Luftstrom (26) den Raupenlaufwerken (7) zuführbar ist.

4. Landwirtschaftliches Arbeitsfahrzeug (1, 2) nach Anspruch 1, **dadurch gekennzeichnet, dass** zumindest ein Gebläse (21) vorgesehen ist, welches einen temperierten Luftstrom (26) bereitstellt, welcher den Raupenlaufwerken (7) zuführbar ist.

5. Landwirtschaftliches Arbeitsfahrzeug (1, 2) nach einem der vorangehenden Ansprüche, **dadurch gekennzeichnet, dass** jedem Raupenlaufwerk (7) zumindest ein Strömungsleitmittel (20) zugeordnet ist.

6. Landwirtschaftliches Arbeitsfahrzeug (1, 2) nach Anspruch 5, **dadurch gekennzeichnet, dass** die Strömungsleitmittel (20) verstellbar ausgeführt sind.

7. Landwirtschaftliches Arbeitsfahrzeug (1, 2) nach Anspruch 1, **dadurch gekennzeichnet, dass** die Rollen (9, 10) und/oder die Laufbänder (13) elektrisch betriebene Heizelemente aufweisen.

8. Landwirtschaftliches Arbeitsfahrzeug (1, 2) nach einem der vorangehenden Ansprüche, **dadurch gekennzeichnet, dass** das Arbeitsfahrzeug (1, 2) eine Steuerungsvorrichtung (22) umfasst, welche zur Steuerung oder Regelung der Temperierung des den Raupenlaufwerke (7) zugeführten Luftstroms (26) eingerichtet ist.

9. Landwirtschaftliches Arbeitsfahrzeug (1, 2) nach Anspruch 8, **dadurch gekennzeichnet, dass** die Steuerungsvorrichtung (22) zur Ansteuerung der Strömungsleitmittel (20), des zumindest einen Gebläses (21) und/oder der Heizelemente eingerichtet ist.

10. Landwirtschaftliches Arbeitsfahrzeug (1, 2) nach einem der vorangehenden Ansprüche, **dadurch gekennzeichnet, dass** zumindest einem Laufband (13) ein Temperatursensor (23) zugeordnet ist.

## Claims

1. An agricultural working vehicle (1, 2) with a chassis (3), a propulsion engine (4) disposed on the chassis (3) and at least two track roller units (7) disposed on the chassis (3) and which respectively have a track framework (8) disposed on the chassis (3) about an axis (5, 6) which extends horizontally and transversely to the longitudinal axis of the working vehicle (1, 2), wherein the respective track framework (8) has front and rear rollers (9, 10) disposed thereon, wherein the respective track framework (8) bears on the ground by means of a moving belt (13) which continuously revolves around the rollers (9, 10) and which consists of a rubber-like material, **characterized in that** the working vehicle (1, 2) is configured to preheat the moving belts (13) prior to an initial movement after starting up the propulsion engine (4).

2. The agricultural working vehicle (1, 2) according to claim 1, **characterized in that** for preheating, waste heat produced by the propulsion engine (4) can be supplied to the track roller units (7).

3. The agricultural working vehicle (1, 2) according to claim 1 or claim 2, **characterized in that** a flow of air (26) generated by a cooling device (14) of the propulsion engine (4) can be supplied to the track roller units (7).

4. The agricultural working vehicle (1, 2) according to claim 1, **characterized in that** at least one fan (21) is provided which produces a temperature controlled flow of air (26) which can be supplied to the track roller units (7).

5. The agricultural working vehicle (1, 2) according to one of the preceding claims, **characterized in that** at least one flow guide means (20) is associated with each track roller unit (7).

6. The agricultural working vehicle (1, 2) according to claim 5, **characterized in that** the flow guide means (20) is configured so as to be adjustable.

7. The agricultural working vehicle (1, 2) according to claim 1, **characterized in that** the rollers (9, 10) and/or the moving belts (13) have electrically operated heating elements.

8. The agricultural working vehicle (1, 2) according to one of the preceding claims, **characterized in that** the working vehicle (1, 2) comprises a control device (22) which is configured for controlling or regulating the temperature control of the flow of air (26) supplied to the track roller units (7).

9. The agricultural working vehicle (1, 2) according to claim 8, **characterized in that** the control device (22) is configured to control the flow guide means (20), the at least one fan (21) and/or the heating elements.

10. The agricultural working vehicle (1, 2) according to one of the preceding claims, **characterized in that** a temperature sensor (23) is associated with at least one moving belt (13).

## Revendications

1. Véhicule de travail agricole (1, 2), comprenant un châssis (3), un moteur d'entraînement (4) disposé sur le châssis (3) et au moins deux trains de roulement à chenilles (7) disposés sur le châssis (3), lesquels comportent respectivement un train de chenille (8) disposé sur le châssis (3) autour d'un essieu (5, 6) s'étendant horizontalement et transversalement à l'axe longitudinal du véhicule de travail (1, 2), le train de chenille respectif (8) comportant des barbotins avant et arrière (9, 10) disposés dessus, le train de chenille respectif (8) prenant appui au sol au moyen d'une bande de roulement (13) défilant en continu autour des barbotins (9, 10), constituée de matière de type caoutchouc, **caractérisé en ce que** le véhicule de travail (1, 2) est agencé pour préchauffer les bandes de roulement (13) avant un premier déplacement après le démarrage du moteur d'entraînement (4).

2. Véhicule de travail agricole (1, 2) selon la revendication 1, **caractérisé en ce que**, pour le préchauffage, une chaleur dissipée produite par le moteur d'entraînement (4) peut être amenée aux trains de roulement à chenilles (7).

3. Véhicule de travail agricole (1, 2) selon la revendication 1 ou 2, **caractérisé en ce qu'**un courant d'air (26) généré par un dispositif de refroidissement (14) du moteur d'entraînement (4) peut être amené aux trains de roulement à chenilles (7).

4. Véhicule de travail agricole (1, 2) selon la revendication 1, **caractérisé en ce qu'**au moins un ventilateur (21) est prévu, lequel fournit un courant d'air tempéré (26) qui peut être amené aux trains de roulement à chenilles (7).

5. Véhicule de travail agricole (1, 2) selon une des revendications précédentes, **caractérisé en ce qu'**à chaque train de roulement à chenilles (7) est associé au moins un moyen de déflexion de courant (20) .

6. Véhicule de travail agricole (1, 2) selon la revendication 5, **caractérisé en ce que** les moyens de déflexion de courant (20) sont conçus de manière réglable.

7. Véhicule de travail agricole (1, 2) selon la revendication 1, **caractérisé en ce que** les barbotins (9, 10) et/ou les bandes de roulement (13) comportent des éléments chauffants fonctionnant électriquement.

8. Véhicule de travail agricole (1, 2) selon une des revendications précédentes, **caractérisé en ce que** le véhicule de travail (1, 2) inclut un dispositif de commande (22) qui est agencé pour commander ou réguler la mise à température du courant d'air (26) amené aux trains de roulement à chenilles (7) .

9. Véhicule de travail agricole (1, 2) selon la revendication 8, **caractérisé en ce que** le dispositif de commande (22) est agencé pour commander les moyens de déflexion de courant (20) du au moins un ventilateur (21) et/ou des éléments chauffants.

10. Véhicule de travail agricole (1, 2) selon une des revendications précédentes, **caractérisé en ce qu'**un capteur de température (23) est associé au moins à une bande de roulement (13).
